# EUROPEAN PATENT SPECIFICATION

(11) **EP 2 918 129 B1**
(45) Date of publication and mention of the grant of the patent: **31.07.2019**
(21) Application number: 12790694.9
(22) Date of filing: 09.11.2012
(51) Int. Cl.: H04W 72/12, H04L 1/18, H04W 76/15

(54) **TRANSMITTING RADIO NODE AND METHOD FOR SCHEDULING SERVICE DATA FLOWS**
ÜBERTRAGUNGSFUNKKNOTEN UND VERFAHREN ZUR ZEITPLANUNG VON DIENSTDATENSTRÖMEN
NOEUD RADIO ÉMETTEUR ET PROCÉDÉ POUR ORDONNANCER DES FLUX DE DONNÉES DE SERVICE

(43) Date of publication of application: 16.09.2015
(73) Proprietor: Telefonaktiebolaget LM Ericsson (publ), 164 83 Stockholm (SE)
(72) Inventor: VOIGT, Lotta, SE-167 71 Bromma (SE); ERIKSSON, Ann-Christine, 749 42 Enköping (SE); STJERNHOLM, Paul, SE-181 60 Lidingö (SE)
(74) Representative: Zacco Sweden AB
(86) International application number: PCT/SE2012/051226
(87) International publication number: WO 2014/074037

(56) References cited:
- EP-A1- 2 448 194
- WO-A2-2004/008698
- WO-A2-2009/051420
- US-A1- 2005 238 051
- US-A1- 2012 269 150
- US-A1- 2012 281 564
- "3rd Generation Partnership Project; Technical Specification Group Radio Access Network; Packet Data Convergence Protocol (PDCP) Specification (Release 2000); 3GPP TS 25.323", IEEE, LIS, SOPHIA ANTIPOLIS CEDEX, FRANCE, vol. 3-R2, no. V4.0.0, 1 January 2001 (2001-01-01), XP014031331, ISSN: 0000-0001

## Description

### TECHNICAL FIELD

Embodiments herein relate to a transmitting radio node and a method therein. In particular, embodiments herein relate to schedule service data flows towards a receiving radio node.

### BACKGROUND

In today's radio communications networks a number of different technologies are used, such as Long Term Evolution (LTE), LTE-Advanced, Wideband Code Division Multiple Access (WCDMA), Worldwide Interoperability for Microwave Access (WiMax), or Ultra Mobile Broadband (UMB), just to mention a few possible implementations. A radio communications network comprises radio base stations providing radio coverage over at least one respective geographical area forming a cell. The cell definition may also incorporate frequency bands used for transmissions, which means that two different cells may cover the same geographical area but using different frequency bands. User equipments (UE) are served in the cells by the respective radio base station and are communicating with respective radio base station. The user equipments transmit data over an air or radio interface to the radio base stations in uplink (UL) transmissions and the radio base stations transmit data over an air or radio interface to the user equipments in downlink (DL) transmissions.

With the usage of Personal Computer (PC) cards, dongles and the heavy increase in smartphone penetration, the packet data traffic has more or less exploded in the radio communications networks. The mobile broadband traffic over the air interface is currently increasing with 200% yearly. The mobile subscribers are using a large variety of services, most of them being internet services going Over The Top (OTT) on a default bearer, i.e. there is no agreement between the service provider and the operator for any specific treatment. Multi-tasking has become frequent, which means that the subscriber is using several services at a time at the user equipment, often multiple Internet services and some without end user intervention, e.g. status updates, emails, etc. during a video session. Being OTT services, without operator control, the services all share the same radio bearer through the Radio Access Network (RAN) to the user equipment, even though the services may have very different quality requirements to achieve a good end user experience.

Currently in the RAN all Quality of Service (QoS) adaptations are done per radio bearer, e.g. scheduling prioritization of data flows are done per radio bearer. RAN functions like Active Queue Management (AQM) and Explicit Congestion Notification (ECN) are thus applied per radio bearer. Statistics for observability purposes are also collected per radio bearer in the RAN.

When an end-user of a user equipment initiates a packet data session accessing the radio communications network a connection is setup between a core network and the user equipment commonly denoted as one bearer service. Several packet data sessions, or service data flows, may be carried by the same bearer service. The bearer service uniquely identifies packet flows, also referred to herein as traffic flows, that receive a common QoS treatment between the user equipment and a gateway to the core network, i.e. through the RAN. In e.g. a System Architecture Evolution (SAE)/LTE radio communications network a corresponding bearer service is denoted Evolved Packet System (EPS) Bearer, while in Universal Mobile Telecommunications System (UMTS) a bearer service is defined by a Packet Data Protocol (PDP) context.

Through the LTE RAN, each bearer service is associated with one E-UTRAN Radio Access Bearer (E-RAB), or for WCDMA RAN, a Radio Access Bearer (RAB), which is associated with one radio bearer. Radio bearer is herein used as a genera! term for a bearer through the RAN and comprises a radio access bearer, a bearer, or similar. For each radio bearer the same QoS is defined as for the bearer service. All traffic mapped to the same radio bearer receive the same treatment for packet forwarding on a bearer level e.g. scheduling policy, queue management policy, rate shaping policy, Radio Link Control (RLC) configuration. An EPS bearer or PDP Context is mapped to one logical channel, a radio bearer, or a radio access bearer for the different standards, e.g. E- RAB for LTE.

A core network node, e.g. a gateway node, may intercept traffic to perform packet inspection such as Deep Packet Inspection (DPI), flow identification, flow classification or similar, to detect different service data flows. The core network node may then initiate the setup of additional radio bearers in order to separate the different service data flows and to make it possible to differentiate the different service data flows on a service level by assigning different QoS to the different radio bearers based on the service of the different service data flows. But from a RAN perspective there is no guarantee that the process to differentiate the different service data flows on a radio bearer level actually is done in the core network. A drawback in e.g. WCDMA with the above core network solution is that it requires multiple radio bearers to be set up, which introduces extra delay when setting up radio bearers in the radio communications network where the setup of radio bearers may be done in sequence. There are also limitations in the number of bearer combinations and number of parallel radio bearers supported by the user equipments and the radio communications network. This results in a reduced performance of the radio communications network. EP2448194 discloses a packet scheduling of different queues. US2012281564 shows flow controls at the PDCP layer. US 2005/0238051 A1 discloses a method for transmitting data blocks based on priority. US 2012/0269150 A1 discloses a terminal for transmitting packets of different types.

### SUMMARY

An object according to embodiments herein is to improve the performance of the radio communications network.

The object is achieved by providing a method and a transmitting radio node according to claims 1 and 7. According to an aspect of embodiments herein, the object is achieved by a method in a transmitting radio node for scheduling service data flows within a radio bearer towards a receiving radio node in a radio communications network. The transmitting radio node identifies at least two service data flows within the radio bearer towards the receiving radio node. Each service data flow is associated with a service and/or a service quality requirement. The service and/or service quality requirement is different for respective service data flow. The transmitting radio node maps a Packet Data Convergence Protocol, PDCP, Service Data Unit, SDU, of respective service data flow to a respective scheduling queue on a PDCP layer. Each scheduling queue is associated with the service and/or the service quality requirement of the respective service data flow. The transmitting radio node schedules to the receiving radio node, the PDCP SDUs within the scheduling queues of the at least two service data flows, based on the service and/or the service quality requirement associated with the respective scheduling queue on the PDCP layer.

According to another aspect of embodiments herein, the object is achieved by a transmitting radio node for scheduling service data flows within a radio bearer towards a receiving radio node in a radio communications network. The transmitting radio node comprises an identifying circuit configured to identify at least two service data flows within the radio bearer towards the receiving radio node. Each service data flow is associated with a service and/or a service quality requirement, and the service and/or the service quality requirement is different for respective service data flow. The transmitting radio node further comprises a mapping circuit configured to map a PDCP SDU of respective service data flow to a respective scheduling queue on a PDCP layer. Each scheduling queue is associated with the service and/or the service quality requirement of the respective service data flow. Furthermore, the transmitting radio node comprises a scheduler configured to schedule to the receiving radio node, the PDCP SDUs within the scheduling queues of the at least two service data flows, based on the service and/or the service quality requirement associated with the respective scheduling queue on the PDCP layer.

Thanks to the identifying and the mapping of PDCP SDUs into scheduling queues at the PDCP layer, an efficient scheduling of the PDCP SDUs from the scheduling queues may be performed within the radio bearer. For services with different service quality requirements it is beneficial and an advantage both from end user experience point of view and from RAN efficiency aspects to give the service data flows differentiated treatment through the RAN leading to a better performance of the radio communications network as perceived by the end user.

### BRIEF DESCRIPTION OF THE DRAWINGS

Embodiments will now be described in more detail in relation to the enclosed drawings, in which:
- Fig. 1: is a schematic overview depicting a radio communications network according to embodiments herein,
- Fig. 2: is a schematic combined flow chart and signalling scheme according to embodiments herein,
- Fig. 3: is a block diagram depicting a scheduling of data packets according to embodiments herein.
- Fig. 4: is a schematic flow chart according to some embodiments herein,
- Fig. 5: is a schematic flow chart depicting a method in a transmitting radio node according to embodiments herein, and
- Fig. 6: is a block diagram depicting a transmitting radio node according to embodiments herein.

### DETAILED DESCRIPTION

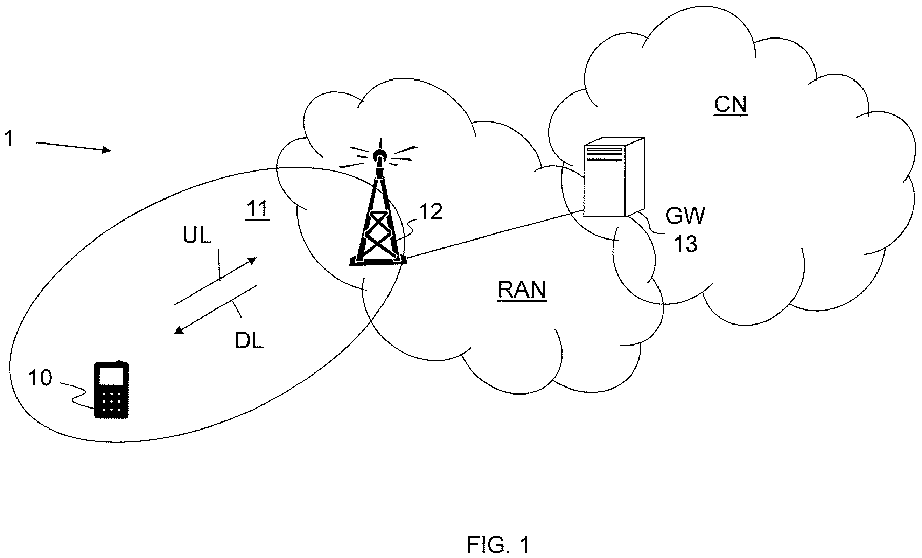

**Fig. 1** is a schematic overview depicting **a ra**d**io communications network 1** according to some embodiments herein. The radio communications network 1 may be an LTE-advanced network, a LTE network, a WCDMA network, a Code Division Multiple Access (CDMA) 2000 network, an Interim Standard 95 (IS-95) network, a Digital-Advanced Mobile Phone Service (D-AMPS) network etc.

The radio communications network 1 comprises **a receiving radio node 10** served in **a cell 11**. The radio communication network 1 further comprises **a transmitting radio node 12** exemplified in Fig. 1 as a radio base station in a Radio Access Network (RAN). The transmitting radio node 12 serves or controls radio resources over a geographical area forming the cell 11. The receiving radio node 10 is served in the cell 11 by the transmitting radio node 12, which receiving radio node 10 being exemplified as a user equipment in the figure. The transmitting radio node 12 and also the receiving radio node 10 may be any node communicating over a radio interface and in the RAN, such as a user equipment or a RAN node, e.g. a Radio Network Controller (RNC), a radio access node, a radio base station, a relay node, a beacon station or similar. In some embodiments herein this means that the transmitting radio node 12 may be a user equipment and the receiving radio node 10 may be a radio base station or an RNC (not shown). Furthermore, the receiving radio node 10 as well as the transmitting radio node 12 are illustrated as single physical entities but it should be understood that the receiving radio node 10 and/or the transmitting radio node 12 may comprise a plurality of physical entities. For example, the transmitting radio node 12 may comprise a RNC and a radio base station.

It should further be understood that the radio base station may also be referred to as e.g. a NodeB, an evolved Node B (eNB, eNode B), a base transceiver station (BTS), an Access Point Base Station, a base station router, or any other network unit capable to communicate with a user equipment within the cell served by the radio base station depending e.g. of the radio access technology and terminology used. The user equipment may be any wireless terminal, device or node e.g. Personal Digital Assistant (PDA), laptop, mobile, sensor, relay, mobile tablets or even a small base station communicating within respective cell. Furthermore, the term RNC should here not be interpreted to strictly so as to comprise only an RNC according to the 3GPP Universal Terrestrial Radio Access Network (UTRAN) standard, but any network control node capable of mapping a data session to different transmission paths through its different ports wherein the different transmission paths exploit different routing protocols. For instance, in case of a CDMA 2000 network, the RNC functionality described below according to embodiments herein may be realised in the Base Station Controllers (BSC) of the CDMA 2000 network.

As illustrated, the RAN may provide access to a Core Network (CN) via a **gateway node 13.**

During a communication session the transmitting radio node 12 may receive a data flow, such as service data flows of different services, within a radio bearer intended for the receiving radio node 10. As stated above radio bearer herein is a general term for a bearer through the access network and comprises radio access bearer, a bearer or similar. According to embodiments herein, Packet Data Convergence Protocol (PDCP) Service Data Units (SDU) of the service data flows within the radio bearer are separated into a number of scheduling queues on a PDCP layer e.g. based on type of services. Hence, a new flow level is added within the radio bearer in the RAN on which the packet scheduling policy is made. Is should here be noted that an SDU is a unit of data that has been passed down from an upper Open Systems Interconnection (OSI) layer to a lower layer and that has not yet been encapsulated into a Protocol Data Unit (PDU) by the lower layer. Thus, a PDCP SDU is a packet that has been passed down from an IP layer towards a PDCP layer but not yet encapsulated into a PDCP PDU.

Embodiments herein enable a service specific packet forwarding treatment e.g. radio scheduling per service data flow instead of per radio bearer. This is done by locating the scheduling queues in the PDCP layer and implementing one scheduling queue per service data flow within each radio bearer, instead of only one queue per radio bearer. The scheduling over the air interface is then done per service data flow and not per radio bearer. Each scheduling queue associated with a service data flow may be prioritized towards all other scheduling queues irrespective of radio bearer. The scheduling according to embodiments herein is effective in the manner of always basing the scheduling on the service, e.g. priority of a service, and/or QoS of the scheduling queues on the PDCP layer. Thus, embodiments herein completely move the scheduling from a bearer level, apart from e.g. retransmissions and radio signalling, as of today's 3GPP standards, to a service data flow level, in order to optimize end user experience and RAN efficiency, and thereby differentiating between different service data flows carried through RAN.

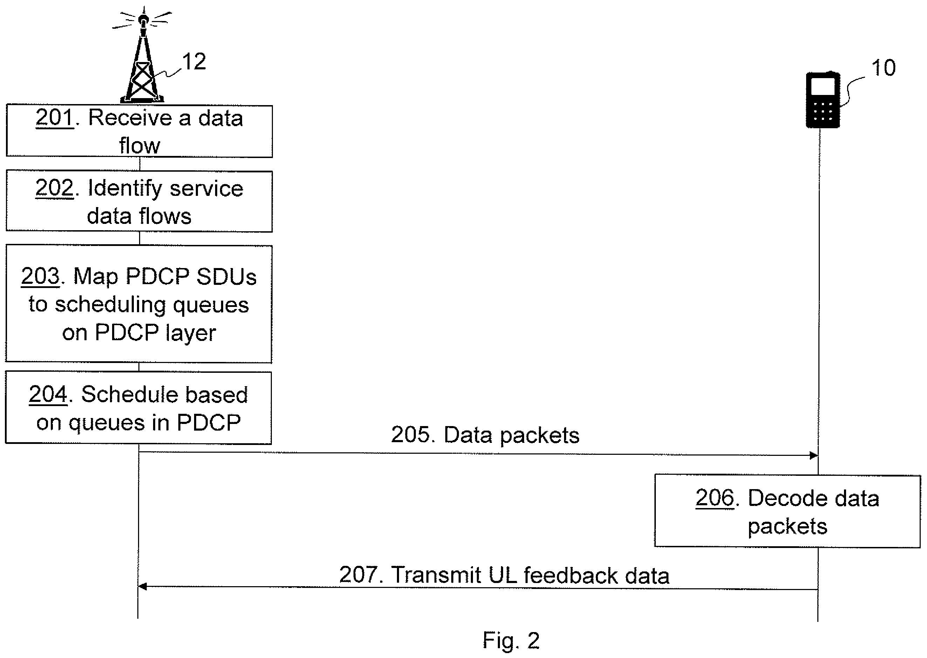

**Fig. 2** is a combined flow chart and signalling scheme according to embodiments herein. The receiving radio node 10 has a number of services, i.e. service data flows, set up over the radio bearer. With embodiments herein separate scheduling queues per service data flow within the radio bearer are introduced in the PDCP layer. As stated above, these scheduling queues are replacing a traditional queue per radio bearer in RLC/Medium Access Control (MAC) layer.
**Action 201.** The transmitting radio node 12 receives service data flows within the radio bearer towards the receiving radio node 10. For example, the transmitting radio node 12 receives a service data flow of an Internet media stream as well as an email service over the same radio bearer.
**Action 202.** The transmitting radio node 12 identifies IP packets or PDCP SDUs of different service data flows. To enable separate treatment of the different service data flows the transmitting radio node 12 needs to identify the different service data flows. The PDCP SDUs belonging to different service data flows may be identified by packet inspection in RAN or service information sent from the CN. With the help of this service information the service and/or its service quality requirement/s, such as QoS requirement, are deduced, and with the help of this service information the service data flow is mapped, see action 203 below, to the relevant scheduling queue; which may also be referred to as a PDCP scheduling queue. Based on the service information a scheduling algorithm is associated with the scheduling queue, e.g. involving a scheduling priority, providing input to the scheduling decision. The association between the scheduling information and the scheduling algorithm may be configured via an Operations and Maintenance (O&M) system.
**Action 203.** The transmitting radio node 12 maps PDCP SDUs of the different service data flows to scheduling queues on the PDCP layer according to service and/or service quality requirement of the service data flows. Each service data flow requiring a unique treatment through the RAN is thus mapped to a separate scheduling queue in PDCP. Service data flows within a radio bearer requiring the same QoS or being of the same service may be mapped to the same queue. For example, different services with the same QoS may be queued in one scheduling queue.
**Action 204.** The transmitting radio node 12 then schedules the PDCP SDUs based on the service or the service quality requirements of the scheduling queues. The transmitting radio node 12 combines the PDCP SDUs into a PDCP flow per radio bearer of PDCP PDUs. A scheduler, also referred to as the radio scheduler or RLC/ MAC scheduler, of the transmitting radio node 12 may fetch PDCP SDUs from the scheduling queues at every scheduling decision or instant. At each scheduling instant the PDCP SDUs for the scheduled service data flows, associated with a radio bearer, may be combined into one PDCP flow for which header compression, PDCP numbering, and ciphering are performed. The resulting PDCP PDUs are forwarded for further treatment on the RLC and MAC protocol layers.
   At each scheduling instant the PDCP SDUs for the scheduled service data flows may be combined into one PDCP flow of PDCP PDUs per radio bearer for which compression, PDCP and RLC numbering, ciphering of data and RLC/MAC procedures are performed per radio bearer.
**Action 205.** The transmitting radio node 12 may then transmit the PDCP PDUs to the receiving radio node 10 as scheduled.
**Action 206.** The receiving radio node 10 receives and decodes the data packets. The receiving radio node 10 is unaffected by the embodiments herein and handles the radio bearer according to legacy, wherein legacy means according to previous systems.
**Action 207.** The receiving radio node 10 may then transmit feedback regarding the received data packets, such as Acknowledgement (ACK) and/or Non-Acknowledgement (NACK) according to a Hybrid Automatic Repeat Request (HARQ) procedure. It should be noted that the transmitting radio node 12 may take HARQ, control signaling and/or RLC retransmission into account when scheduling the PDCP SDUs.

The fetching of PDCP SDUs from the scheduling queues is time critical. The data packets has to be transmitted over the air interface in a Transmission Timing Interval (TTI) while load information and Channel Quality Indicator (CQI) information used in that scheduler instant is still valid. Therefore the processing of the PDCP SDUs, e.g. ciphering, PDPC numbering, RLC numbering etc. is done fast enough within a certain time interval. Embodiments herein are therefore more suitable for E-UTRA than for UTRAN as in UTRAN the scheduling is performed in the radio base station while PDCP handling is located in the RNC, two different nodes that may be located quite far away from each other. In E-UTRAN the PDCP handling and the scheduling is performed in the same node, in the radio base station. In case of UTRAN with flat architecture, where the RNC and radio base station has collapsed into one node, embodiments herein may still be an option but also in an architecture where the RNC and the radio base station is separated.

Embodiments described herein enable service specific packet forwarding treatment in the radio bearer. When the transmitting radio node 12 is a user equipment and queues per service flow are located in PDCP layer on the UE side, the UE may prioritize between the data service flows in the same way as between radio bearers today. Then the UE may need access to service information for the different service data flows within the radio bearer. As an enhancement, if a network node, such as a base station gets to know that the UE has a possibility to prioritize data per service data flow within a radio bearer, the uplink grant, sent to the UE, may be adapted accordingly.

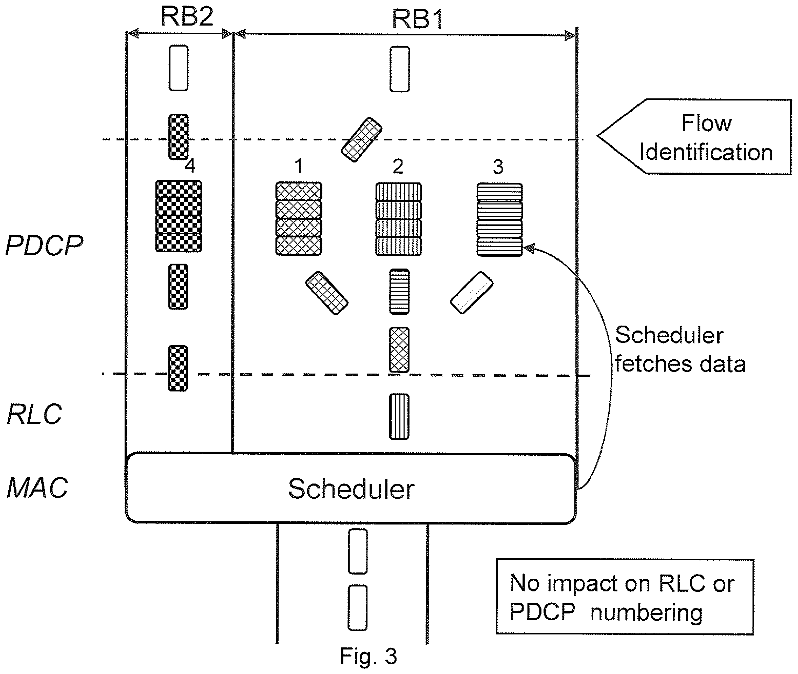

**Fig. 3** is a schematic overview depicting separation of service data flows within the radio bearer. The transmitting radio node 12 identifies, as stated in action 202 above, at the PDCP layer or IP layer, a number of service data flows, may also be referred to as packet flows or service flows, within **a first radio bearer (RB1)** to the receiving radio node 10. In Fig. 3 a first service data flow with identity '1' comprises data packets marked as outlined diamond patterned data packets, a second service data flow with identity '2' comprises data packets marked as vertically striped data packets, and a third service data flow with identity '3' comprises data packets marked as horizontally striped data packets. The transmitting radio node 12 further receives a service data flow with identity '4' within a **second radio bearer (RB2)**. The data packets of the service data flow within RB2 are associated with one and same service or service quality requirement and these data packets are marked with a checkered pattern.

The transmitting radio node 12 maps, corresponding to the action 203 above, the data packets or actually the PDCP SDUs of the identified service data flows to a respective scheduling queue. Each scheduling queue is associated with the service quality requirement and/or the service of the service data flow. The service quality requirement or the service of the PDCP SDUs within the RB2 may be the same, similar or different as for PDCP SDUs in RB1.

The scheduler then schedules SDUs of the different service data flows based on the QoS, retransmissions etc. Scheduling each service data flow within the radio bearer separately, entails reordering of PDCP SDUs within the radio bearer. The reordering is done before the PDCP and RLC numbering is performed. Separate scheduling queues per service data flow at RLC or MAC level, as well as any other method to prioritize packets within a radio bearer, would cause the RLC packets to arrive to the receiving radio node 10 out of order with RLC retransmissions as a consequence. This is avoided in that the scheduling queues per service data flow are placed at PDCP level before PDCP numbering the data packets. Embodiments herein have no impact on the PDCP and RLC numbering procedure.

Fig. 3 depicts the location of the scheduling queues in PDCP and the scheduling per service data flow as well as how to combine PDCP SDUs into one RLC/MAC flow per radio bearer of PDCP PDUs for transmission to the receiving radio node 10 as soon as the scheduling decision on which packets to transmit is taken. A possible solution of treating different service data flows within a radio bearer may comprise a two layered prescheduling alternative. Pre-scheduling is then a step before the scheduling takes place, where flows are divided into queues in order to control the order of packets in the subsequent scheduling queue for a radio bearer. However, embodiments herein have several scheduling queues per bearer on PDCP SDU level, whereas scheduling in the two layered pre-scheduling alternative only have one scheduling queue per bearer on an RLC/MAC level. Thus, in embodiments herein the scheduling queues are moved from the RLC/MAC layer to the PDCP layer, but there is still just one scheduling mechanism. This enables having several scheduling queues per bearer without impacting the scheduling mechanism. This will allow for a more efficient scheduling than with the two layered pre-scheduling alternative.

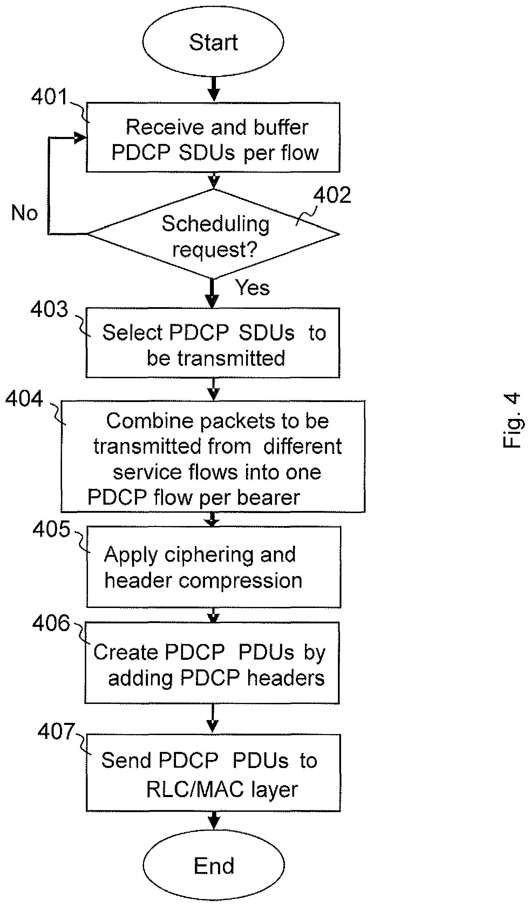

**Fig. 4** shows a specific scheduling process and the combining of separate service data flows into one RLC/MAC flow per radio bearer in a flow chart according to an example of embodiments herein.
**Action 401.** The transmitting radio node 12 may receive and buffer PDCP SDUs per service data flow. The transmitting radio node 12 identifies PDCP SDUs of different service data flows and maps PDCP SDUs according to the different services and/or service quality requirements to scheduling queues on the PDCP layer. These scheduling queues may also be referred to as scheduling buffers. Each scheduling queue is thus associated with a service and/or a service quality requirement. This action corresponds to actions 201- 203 in Fig. 2.
**Action 402.** The transmitting radio node 12 then checks whether a scheduling request has been received from the receiving radio node 10. If not the buffering continues at the PDCP layer, and when the scheduling request is received see action 403.
**Action 403.** The scheduler of the transmitting radio node 12 then selects PDCP SDUs, that is schedules, in the different queues to be transmitted to the receiving radio node 10. This action corresponds to Action 204 in Fig. 2.
**Action 404.** The transmitting radio node 12 then combines the PDCP SDUs to be transmitted from the different service data flows into one PDCP flow per radio bearer.
**Action 405.** The transmitting radio node 12 then applies the ciphering and header compression of the PDCP SDUs.
**Action 406.** The transmitting radio node 12 then creates PDCP PDUs by adding PDCP header to the PDCP SDUs.
**Action 407.** The transmitting radio node 12 then sends the created PDCP PDUs to the RLC/MAC layer for radio transmission to the receiving radio node 10.

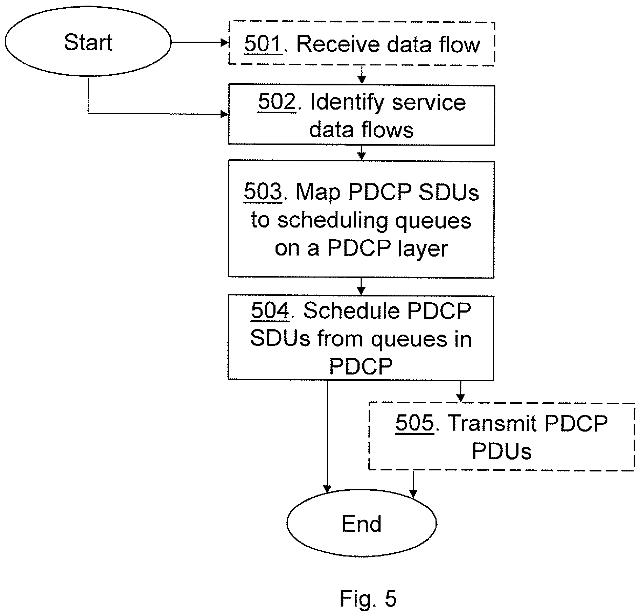

The action steps in the transmitting radio node 12, exemplified as a radio base station in the figures, for scheduling service data flows within the radio bearer towards the receiving radio node 10 in the radio communications network 1 according to some general embodiments will now be described with reference to a flowchart depicted in Fig. 5. The actions do not have to be taken in the order stated below, but may be taken in any suitable order. Actions merely performed in some embodiments are marked with dashed boxes. The transmitting radio node 12 may be comprised in a radio access network with a flat architecture as well as in a non-flat architecture, wherein the transmitting radio node 12 comprises a radio base station. However, the transmitting radio node 12 may also comprise two physical entities e.g. both an RNC and a radio base station.
**Action 501.** The transmitting radio node 12 may receive a data flow comprising at least two service data flows within the radio bearer from a core network node, such as the GW 13, or a radio base station, e.g. over X2 interface or similar. This action 501 corresponds to the action 201 in Fig. 2 and partly to the action 401 in Fig. 4.
**Action 502.** The transmitting radio node 12 identifies the at least two service data flows within the radio bearer towards the receiving radio node 10. Each service data flow is associated with a service and/or a service quality requirement, which service and/or service quality requirement is different for respective service data flow. The transmitting radio node 12 may identify the service data flows or data packets of the service data flows on an Internet Packet, IP, layer of the data packet. This action 502 corresponds to the action 202 in Fig. 2 and partly to the action 401 in Fig. 4.
**Action 503.** The transmitting radio node 12 maps the PDCP SDU of respective service data flow to the respective scheduling queue on the PDCP layer. Each scheduling queue is associated with the service and/or the service quality requirement of the respective service data flow. Each scheduling queue or SDUs may be marked with the service and/or the service quality requirement, or the scheduler of the transmitting radio node 12 may be informed by signalling which scheduling queue is associated with which service and/or service quality requirement. This may for example be performed based on packet inspection. The services and/or service quality requirements of the scheduling queues may be a combination of information signalled and information configured. This action 503 corresponds to the action 203 in Fig. 2 and partly to the action 401 in Fig. 4.
**Action 504.** The transmitting radio node 12 schedules to the receiving radio node 10, PDCP SDUs within the scheduling queues of at least two service data flows, based on the service and/or the service quality requirement associated with the respective scheduling queue on the PDCP layer. The scheduling queues comprise PDCP SDUs of respective service data flow. The transmitting radio node 12 may schedule the PDCP SDUs, at the scheduling instant, by deciding which scheduling queue or queues to select a PDCP SDU or PDCP SDUs from and an amount of data to be transmitted. The transmitting radio node 12 may also take HARQ signalling and/or RLC retransmissions into account in the scheduling. The transmitting radio node 12 may during the scheduling, at each scheduling instant, combine the PDCP SDUs of the, different, scheduling queues adhering to the radio bearer, into a PDCP flow per radio bearer of PDCP PDUs. The PDCP PDUs are forwarded to subsequent protocol layers for further treatment. The further treatment may be according to legacy treatment. Thus, the transmitting radio node 12 may number PDCP SDUs by adding a PDCP header with a number to each PDCP PDU after the mapping of the packet. In some embodiments the scheduling implies a selection of SDUs and comes implicitly from selecting what PDCP SDUs to be scheduled and is done before the transmitting radio node 12 adds a header to the PDCP SDUs. For example, PDCP SDUs of different scheduling queues are combined into a PDCP/ RLC flow per radio bearer for which PDCP header compression, PDCP numbering and RLC numbering, ciphering of the packets, and RLC/MAC handling are performed for each radio bearer. In some embodiments the transmitting radio node 12 schedules PDCP SDUs irrespective of which radio bearer the PDCP SDU belongs to but according to a principle. The scheduler always follows some principle when selecting what scheduling queues to be scheduled. This action 504 corresponds to the action 204 in Fig. 2 and to the action 403 in Fig. 4.
**Action 505.** The transmitting radio node 12 may then transmit the PDCP PDUs to the receiving radio node 10 according to the PDCP flow directly after the transmitting radio node 12 schedules the PDCP SDUs. Thus, there is no queue in the RLC/MAC layer and the PDCP SDUs are transmitted as PDUs in a continuous manner. This action 505 corresponds to the action 205 in Fig. 2.

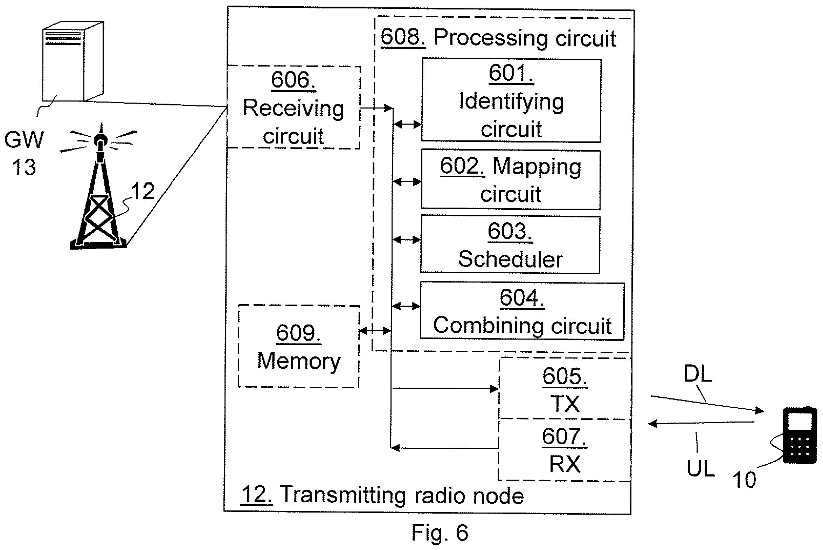

**Fig. 6** is a block diagram depicting the transmitting radio node 12 for scheduling service data flows in the radio bearer to the receiving radio node 10. The circuits and units that are marked with dashed lines are comprised in some of the embodiments herein. The transmitting radio node 12 may comprise a radio base station, or a radio base station and a radio network controller.

The transmitting radio node 12 comprises **an identifying circuit 601** configured to identify at least two service data flows within the radio bearer towards the receiving radio node 10. Each service data flow is associated with the service and/or the service quality requirement, which service and/or service quality requirement is different for respective service data flow.

The transmitting radio node 12 further comprises **a mapping circuit 602** configured to map the PDCP SDU of respective service data flow to the respective scheduling queue on the PDCP layer. Each scheduling queue is associated with the service and/or the service quality requirement of the respective service data flow.

The transmitting radio node 12 also comprises **a scheduler 603** configured to schedule to the receiving radio node 10, the PDCP SDUs within the scheduling queues of the at least two service data flows. The scheduling is based on the service and/or the service quality requirement associated with the respective scheduling queue on the PDCP layer. The scheduler 603 may be configured to, at the scheduling instant, decide which scheduling queue/queues to select a PDCP SDU or PDCP SDUs from and an amount of data to be transmitted, and also to take into account HARQ signalling and/or RLC retransmissions.

The transmitting radio node 12 may further comprise **a combining circuit 604** configured to, at each scheduling instant, combine PDCP SDUs of the scheduling queues adhering to the radio bearer, into a PDCP flow per radio bearer of PDCP PDUs, and to forward the PDCP PDUs to subsequent protocol layers for further treatment.

The transmitting radio node 12 further comprises **a transmitter 605** that may be configured to transmit the PDCP PDUs to the receiving radio node 10 according to the PDCP flow directly after the further treatment after the scheduler 603.

The transmitting radio node 12 may further comprise **a receiving circuit 606** configured to receive a data flow comprising the at least two service data flows within the radio bearer from a core network node or a radio base station.

The transmitting radio node 12 further comprises **a receiver 607** that may be configured to receive data from the receiving radio node 10 such as ACKs and/or NACKs.

The embodiments herein for scheduling service data flows may be implemented through one or more processors, such as **a processing circuit 608** in the transmitting radio node 12 depicted in Fig. 6, together with computer program code for performing the functions and/or method steps of the embodiments herein. The program code mentioned above may also be provided as a computer program product, for instance in the form of a data carrier carrying computer program code for performing embodiments herein when being loaded into the transmitting radio node 12. One such carrier may be in the form of a CD ROM disc. It is however feasible with other data carriers such as a memory stick. The computer program code may furthermore be provided as pure program code on a server and downloaded to the transmitting radio node 12.

The transmitting radio node 12 may further comprise **a memory 609.** The memory 609 may comprise one or more memory units and may be used to store for example data such as scheduling data, SDUs, PDUs, scheduling algorithms, cyphering keys, application to perform the methods herein when being executed on the transmitting radio node 12 or similar.

Those skilled in the art will also appreciate that the various "circuits" described may refer to a combination of analog and digital circuits, and/or one or more processors configured with software and/or firmware, e.g., stored in memory, that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method performed by a transmitting radio node (12) for scheduling service data flows within a radio bearer towards a receiving radio node (10) in a radio communications network (1), the method comprising:
- *identifying* (202,502) at least two service data flows within the radio bearer towards the receiving radio node (10), wherein each service data flow is associated with a service and/or a service quality requirement, which service and/or service quality requirement is different for respective service data flow; **characterized in** comprising:
- *mapping* (203,503) a Packet Data Convergence Protocol, PDCP, Service Data Unit, SDU, of respective service data flow to a respective scheduling queue on a PDCP layer, wherein each scheduling queue is associated with the service and/or the service quality requirement of the respective service data flow; and
- *scheduling* (204,504) to the receiving radio node (10), the PDCP SDUs within the scheduling queues of the at least two service data flows, based on the service and/or the service quality requirement associated with the respective scheduling queue on the PDCP layer, wherein the *scheduling* (204,504), at a scheduling instant, comprises to combine PDCP SDUs of the scheduling queues adhering to the radio bearer, into one PDCP flow per radio bearer of PDCP Packet Data Units, PDUs, for which header compression, PDCP numbering and ciphering are performed and to forward the PDCP PDUs to Radio Link Control, RLC, and Medium Access Control, MAC, protocol layers for further treatment.

2. A method according to claim 1, wherein the *scheduling* (204,504), at a scheduling instant, comprises to decide which scheduling queue/queues to select a PDCP SDU or PDCP SDUs from and an amount of data to be transmitted, and also taking into account Hybrid Automatic Repeat Request, HARQ, signalling and/or RLC retransmissions in the *scheduling* (204,504).

3. A method according to any of claims 1-2, further comprising
- *transmitting* (205,505) the PDCP PDUs to the receiving radio node (10) according to the PDCP flow directly after the further treatment.

4. A method according to any of the claims 1-3, further comprising
- *receiving* (201,501) a data flow comprising the at least two service data flows within the radio bearer from a core network node or a radio base station.

5. A method according to any of the claims 1-4, wherein the transmitting radio node (12) comprises a radio base station.

6. A method according to any of the claims 1-4, wherein the transmitting radio node (12) comprises a radio base station and a radio network controller.

7. A transmitting radio node (12) for scheduling service data flows within a radio bearer towards a receiving radio node (10) in a radio communications network (1), comprising:
an identifying circuit (601) configured to identify at least two service data flows within the radio bearer towards the receiving radio node (10), wherein each service data flow is associated with a service and/or a service quality requirement, which service and/or service quality requirement is different for respective service data flow;
**characterized in** comprising:
a mapping circuit (602) configured to map a Packet Data Convergence Protocol, PDCP, Service Data Unit, SDU, of respective service data flow to a respective scheduling queue on a PDCP layer, wherein each scheduling queue is associated with the service and/or the service quality requirement of the respective service data flow; and
a scheduler (603) configured to schedule to the receiving radio node (10), the PDCP SDUs within the scheduling queues of the at least two service data flows, based on the service and/or the service quality requirement associated with the respective scheduling queue on the PDCP layer; and further comprising
a combining circuit (604) configured to, at a scheduling instant, combine PDCP SDUs of the scheduling queues adhering to the radio bearer, into one PDCP flow per radio bearer of PDCP Packet Data Units, PDUs, for which header compression, PDCP numbering and ciphering are performed and to forward the PDCP PDUs to Radio Link Control, RLC, and Medium Access Control, MAC, protocol layers for further treatment..

8. A transmitting radio node (12) according to claim 7, wherein the scheduler (603) is configured, at a scheduling instant, to decide which scheduling queue/queues to select a PDCP SDU or PDCP SDUs from and an amount of data to be transmitted, and also to take into account Hybrid Automatic Repeat Request, HARQ, signalling and/or RLC retransmissions.

9. A transmitting radio node (12) according to any of the claims 7-8, further comprising
a transmitter (605) configured to transmit the PDCP PDUs to the receiving radio node (10) according to the PDCP flow directly after the further treatment.

10. A transmitting radio node (12) according to any of the claims 7-9, further comprising
a receiving circuit (606) configured to receive a data flow comprising the at least two service data flows within the radio bearer from a core network node or a radio base station.

11. A transmitting radio node (12) according to any of the claims 7-10, wherein the transmitting radio node (12) comprises a radio base station.

12. A transmitting radio node (12) according to any of the claims 7-10, wherein the transmitting radio node (12) comprises a radio base station and a radio network controller.

## Patentansprüche

1. Verfahren, das durch einen übertragenden Funkknoten (12) zum Planen von Dienstdatenströmen innerhalb eines Funkträgers in Richtung eines empfangenden Funkknotens (10) in einem Funkkommunikationsnetz (1) durchgeführt wird, wobei das Verfahren umfasst:
- *Identifizieren* (202, 502) von mindestens zwei Dienstdatenströmen innerhalb des Funkträgers in Richtung des empfangenden Funkknotens (10), wobei jeder Dienstdatenstrom einem Dienst und/oder einer Dienstqualitätsanforderung zugeordnet ist, wobei sich der Dienst und/oder die Dienstqualitätsanforderung für den jeweiligen Dienstdatenstrom unterscheidet; **dadurch gekennzeichnet, dass** es Folgendes umfasst:
- *Abbilden* (203, 503) einer Paketdatenkonvergenzprotokoll-Dienstdateneinheit, PDCP-SDU, des jeweiligen Dienstdatenstroms auf eine entsprechende Planungswarteschlange auf einer PDCP-Schicht, wobei jede Planungswarteschlange dem Dienst und/oder der Dienstqualitätsanforderung des jeweiligen Dienstdatenstroms zugeordnet ist; und
- *Planen* (204, 504) zu dem empfangenden Funkknoten (10), der PDCP-SDUs innerhalb der Planungswarteschlangen der mindestens zwei Dienstdatenströme, basierend auf dem Dienst und/oder der Dienstqualitätsanforderung, die der jeweiligen Planungswarteschlange auf der PDCP-Schicht zugeordnet ist, wobei das *Planen* (204, 504) zu einem Planungszeitpunkt das Kombinieren von PDCP-SDUs der an den Funkträger gebundenen Planungswarteschlangen umfasst, zu einem PDCP-Strom pro Funkträger von PDCP-Paketdateneinheiten, PDCP-PDUs, für die Header-Kompression, PDCP-Nummerierung und -Verschlüsselung durchgeführt werden, und Weiterleiten der PDCP-PDUs an Funkverbindungssteuerungsprotokollschichten, RLC-Protokollschichten, und Mediumzugriffssteuerungsprotokollschichten, MAC-Protokollschichten, zur weiteren Bearbeitung.

2. Verfahren nach Anspruch 1, wobei das *Planen* (204, 504) zu einem Planungszeitpunkt das Entscheiden umfasst, aus welcher/welchen Planungswarteschlange/-warteschlangen eine PDCP-SDU oder PDCP-SDUs und eine Menge von zu übertragenden Daten ausgewählt werden sollen, und auch das Berücksichtigen von Hybrid Automatic Repeat Request-Signalisierung, HARQ-Signalisierung, und/oder RLC-Neuübertragungen in der *Planung* (204, 504).

3. Verfahren nach einem der Ansprüche 1 bis 2, ferner umfassend
*- Übertragen* (205, 505) der PDCP-PDUs an den empfangenden Funkknoten (10) gemäß dem PDCP-Strom direkt nach der weiteren Bearbeitung.

4. Verfahren nach einem der Ansprüche 1 bis 3, ferner umfassend
*- Empfangen* (201, 501) eines Datenstroms, der die mindestens zwei Dienstdatenströme innerhalb des Funkträgers von einem Kernnetzknoten oder einer Funkbasisstation umfasst.

5. Verfahren nach einem der Ansprüche 1 bis 4, wobei der übertragende Funkknoten (12) eine Funkbasisstation umfasst.

6. Verfahren nach einem der Ansprüche 1 bis 4, wobei der übertragende Funkknoten (12) eine Funkbasisstation und eine Funknetzsteuerung umfasst.

7. Übertragender Funkknoten (12) zum Planen von Dienstdatenströmen innerhalb eines Funkträgers in Richtung eines empfangenden Funkknotens (10) in einem Funkkommunikationsnetz (1), umfassend:
eine Identifizierungsschaltung (601), die dazu konfiguriert ist, mindestens zwei Dienstdatenströme innerhalb des Funkträgers in Richtung des empfangenden Funkknotens (10) zu identifizieren, wobei jeder Dienstdatenstrom einem Dienst und/oder einer Dienstqualitätsanforderung zugeordnet ist, wobei sich der Dienst und/oder die Dienstqualitätsanforderung für den jeweiligen Dienstdatenstrom unterscheidet;
**dadurch gekennzeichnet, dass** er Folgendes umfasst:
eine Abbildungsschaltung (602), die dazu konfiguriert ist, eine Paketdatenkonvergenzprotokoll-Dienstdateneinheit, PDCP-SDU, des jeweiligen Dienstdatenstroms auf eine entsprechende Planungswarteschlange auf einer PDCP-Schicht abzubilden, wobei jede Planungswarteschlange dem Dienst und/oder der Dienstqualitätsanforderung des jeweiligen Dienstdatenstroms zugeordnet ist; und
einen Scheduler (603), der dazu konfiguriert ist, die PDCP-SDUs innerhalb der Planungswarteschlangen der mindestens zwei Dienstdatenströme zu dem empfangenden Funkknoten (10) zu planen, basierend auf dem Dienst und/oder der Dienstqualitätsanforderung, die der jeweiligen Planungswarteschlange auf der PDCP-Schicht zugeordnet ist; und
**dadurch, dass** er ferner umfasst
eine Kombinationsschaltung (604), die dazu konfiguriert ist, zu einem Planungszeitpunkt PDCP-SDUs der an den Funkträger gebundenen Planungswarteschlangen zu einem PDCP-Strom pro Funkträger von PDCP-Paketdateneinheiten, PDCP-PDUs, für die Header-Kompression, PDCP-Nummerierung und -Verschlüsselung durchgeführt werden, zu kombinieren und die PDCP-PDUs an Funkverbindungssteuerungsprotokollschichten, RLC-Protokollschichten, und Mediumzugriffssteuerungsprotokollschichten, MAC-Protokollschichten, zur weiteren Bearbeitung weiterzuleiten.

8. Übertragender Funkknoten (12) nach Anspruch 7, wobei der Scheduler (603) dazu konfiguriert ist, zu einem Planungszeitpunkt zu entscheiden, aus welcher/welchen Planungswarteschlange/- warteschlangen eine PDCP-SDU oder PDCP-SDUs und eine Menge von zu übertragenden Daten ausgewählt werden sollen, und auch Hybrid Automatic Repeat Request-Signalisierung, HARQ-Signalisierung, und/oder RLC-Neuübertragungen berücksichtigt werden soll.

9. Übertragender Funkknoten (12) nach einem der Ansprüche 7 bis 8, ferner umfassend
einen Sender (605), der dazu konfiguriert ist, die PDCP-PDUs an den empfangenden Funkknoten (10) gemäß dem PDCP-Strom direkt nach der weiteren Bearbeitung zu übertragen.

10. Übertragender Funkknoten (12) nach einem der Ansprüche 7 bis 9, ferner umfassend eine Empfangsschaltung (606), die dazu konfiguriert ist, einen Datenstrom zu empfangen, der die mindestens zwei Dienstdatenströme innerhalb des Funkträgers von einem Kernnetzknoten oder einer Funkbasisstation umfasst.

11. Übertragender Funkknoten (12) nach einem der Ansprüche 7 bis 10, wobei der übertragende Funkknoten (12) eine Funkbasisstation umfasst.

12. Übertragender Funkknoten (12) nach einem der Ansprüche 7 bis 10, wobei der übertragende Funkknoten (12) eine Funkbasisstation und eine Funknetzsteuerung umfasst.

## Revendications

1. Procédé mis en oeuvre par un noeud radio de transmission (12) pour la planification de flux de données de service au sein d'une porteuse radio en direction d'un noeud radio de réception (10) dans un réseau de communications radio (1), le procédé comprenant :
- l'*identification* (202, 502) d'au moins deux flux de données de service au sein de la porteuse radio en direction du noeud radio de réception (10), dans lequel chaque flux de données de service est associé à un service et/ou à une exigence de qualité de service, service et/ou exigence de qualité de service qui sont différents pour un flux de données de service respectif ; **caractérisé en ce qu'**il comprend :
- le *mappage* (203, 503) d'une unité de données de service, SDU, de protocole de convergence de données de paquet, PDCP, d'un flux de données de service respectif à une file d'attente de planification respective sur une couche PDCP, dans lequel chaque file d'attente de planification est associée au service et/ou à l'exigence de qualité de service du flux de données de service respectif ; et
- la *planification* (204, 504) vers le noeud radio de réception (10), des SDU PDCP au sein des files d'attente de planification des au moins deux flux de données de service, sur la base du service et/ou de l'exigence de qualité de service associés à la file d'attente de planification respective sur la couche PDCP, dans lequel la *planification* (204, 504), à un moment de planification, comprend la combinaison des SDU PDCP des files d'attente de planification adhérant à la porteuse radio, en un flux PDCP par porteuse radio d'unités de données de paquet, PDU, PDCP pour lequel une compression d'en-tête, une numérotation PDCP et un chiffrement sont mis en oeuvre et l'acheminement des PDU PDCP aux couches de protocole de commande de liaison radio, RLC, et de commande d'accès au support, MAC, pour un traitement ultérieur.

2. Procédé selon la revendication 1, dans lequel la *planification* (204, 504), à un moment de planification, comprend le fait de décider à partir de quelle(s) file d'attente/files d'attente de planification il faut sélectionner une SDU PDCP ou des SDU PDCP et une quantité de données à transmettre, et également la prise en compte d'une signalisation de demande de répétition automatique hybride, HARQ, et/ou de retransmissions RLC dans la *planification* (204, 504).

3. Procédé selon l'une quelconque des revendications 1 à 2, comprenant en outre
- la *transmission* (205, 505) des PDU PDCP au noeud radio de réception (10) selon le flux PDCP directement après le traitement ultérieur.

4. Procédé selon l'une quelconque des revendications 1 à 3, comprenant en outre
- la *réception* (201, 501) d'un flux de données comprenant les au moins deux flux de données de service au sein de la porteuse radio depuis un noeud de réseau central ou une station de base radio.

5. Procédé selon l'une quelconque des revendications 1 à 4, dans lequel le noeud radio de transmission (12) comprend une station de base radio.

6. Procédé selon l'une quelconque des revendications 1 à 4, dans lequel le noeud radio de transmission (12) comprend une station de base radio et un contrôleur de réseau radio.

7. Noeud radio de transmission (12) pour la planification de flux de données de service au sein d'une porteuse radio en direction d'un noeud radio de réception (10) dans un réseau de communications radio (1), comprenant :
un circuit d'identification (601) configuré pour identifier au moins deux flux de données de service au sein de la porteuse radio en direction du noeud radio de réception (10), dans lequel chaque flux de données de service est associé à un service et/ou à une exigence de qualité de service, service et/ou exigence de qualité de service qui sont différents pour un flux de données de service respectif ;
**caractérisé en ce qu'**il comprend :
un circuit de mappage (602) configuré pour mapper une unité de données de service, SDU, de protocole de convergence de données de paquet, PDCP, d'un flux de données de service respectif à une file d'attente de planification respective sur une couche PDCP, dans lequel chaque file d'attente de planification est associée au service et/ou à l'exigence de qualité de service du flux de données de service respectif ; et
un planificateur (603) configuré pour planifier vers le noeud radio de réception (10), les SDU PDCP au sein des files d'attente de planification des au moins deux flux de données de service, sur la base du service et/ou de l'exigence de qualité de service associés à la file d'attente de planification respective sur la couche PDCP ; et comprenant en outre un circuit de combinaison (604) configuré pour, à un moment de planification, combiner les SDU PDCP des files d'attente de planification adhérant à la porteuse radio, en un flux PDCP par porteuse radio d'unités de données de paquet, PDU, PDCP, pour lesquelles une compression d'en-tête, une numérotation PDCP et un chiffrement sont mis en oeuvre et pour acheminer les PDU PDCP à des couches de protocole de commande de liaison radio, RLC, et de commande d'accès au support, MAC, pour un traitement ultérieur.

8. Noeud radio de transmission (12) selon la revendication 7, dans lequel le planificateur (603) est configuré, à un moment de planification, pour décider à partir de quelle(s) file d'attente/files d'attente de planification il faut sélectionner une SDU PDCP ou des SDU PDCP et une quantité de données à transmettre, et également pour prendre en compte une signalisation de demande de répétition automatique hybride, HARQ, et/ou des retransmissions RLC.

9. Noeud radio de transmission (12) selon l'une quelconque des revendications 7 ou 8, comprenant en outre
un émetteur (605) configuré pour transmettre les PDU PDCP au noeud radio de réception (10) selon le flux PDCP directement après le traitement ultérieur.

10. Noeud radio de transmission (12) selon l'une quelconque des revendications 7 à 9, comprenant en outre un circuit de réception (606) configuré pour recevoir un flux de données comprenant les au moins deux flux de données de service au sein de la porteuse radio depuis un noeud de réseau central ou une station de base radio.

11. Noeud radio de transmission (12) selon l'une quelconque des revendications 7 à 10, dans lequel le noeud radio de transmission (12) comprend une station de base radio.

12. Noeud radio de transmission (12) selon l'une quelconque des revendications 7 à 10, dans lequel le noeud radio de transmission (12) comprend une station de base radio et un contrôleur de réseau radio.
